# EUROPÄISCHE PATENTSCHRIFT

(11) **EP 0 368 086 B1**
(45) Veröffentlichungstag und Bekanntmachung des Hinweises auf die Patenterteilung: **28.07.1993**
(21) Anmeldenummer: 89119908.5
(22) Anmeldetag: 26.10.1989
(51) Int. Cl.: F16J 15/32, F16J 15/16

(54) **Wechselseitig wirkende Dichtungsanordnung und Dichtung dafür**
Double-acting seal arrangement, and sealing therefor
Dispositif d'étanchéité à double effet et joint à cet effet

(30) Priorität: 26.10.1988 DE 3836506
(43) Veröffentlichungstag der Anmeldung: 16.05.1990
(73) Patentinhaber: Martin Merkel GmbH & Co. KG, D-21107 Hamburg (DE)
(72) Erfinder: Müller, Heinz K., Prof.Dr.-Ing., D-7050 Waiblingen (DE)
(74) Vertreter: Glawe, Delfs, Moll & Partner

(56) Entgegenhaltungen:
- EP-A- 0 253 086
- WO-A-87/06991
- US-A- 3 678 809

## Beschreibung

Die Erfindung betrifft eine wechselseitig wirkende Dichtungsanordnung mit einer Dichtung, einem die Dichtung in einem Ringraum aufnehmenden Bauteil und einer relativ dazu axial und/oder drehend bewegten Gegenlauffläche, wobei die Dichtung von zwei gegensinnig orientierten, jeweils nur in einer Druckrichtung wirkenden Dichtringen gebildet ist (US-A-3 678 809).

Dichtungsanordnungen dieser Art sind bei doppelt wirkenden Kolbendichtungen bekannt, wobei zwei jeweils manschettenartige Dichtringe derart kombiniert sind, daß ihre Druckseite jeweils nach außen gewendet ist. Sie haben den grundsätzlichen Nachteil, daß die an der Dichtkante wirkende Pressung dem abzudichtenden Differenzdruck proportional ist, so daß bei großem Differenzdruck die Reibleistung groß ist und bei geringem Differenzdruck das Dichtvermögen oftmals unbefriedigend ist.

Es ist eine Dichtungsanordnung bekannt (WO-A 87/06991), die aufgrund folgender Konstruktionsmerkmale stark druckentlastet ist und die oben bezeichneten Nachteile von Manschettendichtungen nicht aufweist. Sie umfaßt einen Dichtring mit einem dünnwandigen, rohrförmigen Dichtringteil, der am einen Ende mit einem Stützteil verbunden ist und am anderen Ende eine Dichtkante trägt. Er ist umgeben von einem Spannring aus elastischem Werkstoff, der den Axialschub von einer Stirnfläche des Stützrings auf eine Stirnfläche des Einbau-Ringraums überträgt. Die Dichtkante ist nahe der Ebene dieser Stirnkante des Einbau-Ringraums gelegen. Sowohl in dem zwischen dem rohrförmigen Dichtringteil der Gegenlauffläche gebildeten Spalt als auch auf den Spannring wirkt der abzudichtende Druck. Die von ihm von radial innen bzw. radial außen auf den rohrförmigen Dichtringteil ausgeübten Radialkräfte heben sich weitgehend auf, so daß an der Dichtkante nur eine geringe Differenzkraft wirkt, die von dem konstruktiv leicht einstellbaren Axialabstand zwischen der Dichtkantenebene und der Stirnfläche des Ringraums abhängt.

Will man eine wechselseitige Abdichtung schaffen, so lassen diese Dichtringe sich - anders als bekannte Manschettendichtungen - nicht einfach doppelt mit gegensinniger Dichtwirkung in einem Einbau-Ringraum zusammenfassen. Würde man dies in der für solche Zwecke üblichen Anordnung tun, nämlich so, daß die Druckseiten der einzelnen Dichtringe jeweils nach außen gewendet sind, so würden sich die Dichtkanten der beiden Dichtringe im mittleren Bereich des Ringraums befinden. Demnach wäre nicht die Funktionsvoraussetzung erfüllt, daß die Dichtkantenebene nahe der abstützenden Stirnfläche des Ringraums liegt.

Der Erfindung liegt die Aufgabe zugrunde, die bekannte Dichtungsanordnung für doppelt wirkenden Einsatz geeignet zu machen.

Die erfindungsgemäße Lösung besteht außer der Anwendung der genannten Dichtringe darin, daß die Dichtringe einander ihre Druckseite zukehren, daß die axiale Nachgiebigkeit der Dichtung und die axiale Länge des Ringraums so bemessen sind, daß der druckseitige Spannring sich bei Differenzdruckeinwirkung von der zugehörigen Stirnfläche des Ringraums abhebt, und daß die zwischen der Dichtung und der Gegenlauffläche einerseits und dem Ringraumgrund andererseits befindlichen Räume miteinander verbunden sind.

Der bei Differenzdruckeinwirkung aktive Dichtring ist somit jeweils der auf der Niederdruckseite. Der druckseitige Dichtring wird von der Differenzdruckeinwirkung dadurch entlastet, daß sein Spannring sich von der druckseitigen Ringraumstirnfläche abhebt und daher der höhere Druck sich bis zu dem niederdruckseitigen Dichtring fortpflanzen kann. Damit an diesem der funktionsnotwendige Ausgleich der von radial innen und radial außen einwirkenden Druckkräfte erfolgen kann, ist der der Gegenlauffläche zugewendete Raum zwischen den beiden Dichtringe mit dem rückseitigen Dichtungsraum verbunden.

Im druckdifferenzfreien Zustand sollen die beiden als Sekundärdichtungen wirkenden Spannringe an den zugehörigen Ringraum-Stirnflächen im wesentlichen anliegen, damit eine Anfangsdichtwirkung gewährleistet ist. Kommt es auf die Anfangsdichtwirkung nicht an, so ist ein kleines axiales Spiel der Dichtung innerhalb des Ringraums unschädlich, sofern gewährleistet bleibt, daß bei Differenzdruckeinwirkung der Spannring des niederdruckseitigen Dichtrings an der zugehörigen Ringraumstirnfläche dichtend zur Anlage kommt.

Wenn im druckdifferenzfreien Zustand oder bei geringer Druckdifferenz beide Spannringe an den zugehörigen Ringraumstirnflächen anliegen, ist der oben beschriebene Radialkraftausgleich an den rohrförmigen Dichtringteilen nicht gewährleistet. Damit er jedenfalls zustandekommt, wenn Druckdifferenzen erreicht werden, die andernfalls für die Dichtung schädlich sein könnten, sollte sich der druckseitig gelegene Spannring schon bei einem niedrigen Differenzdruck von der zugehörigen Stirnfläche abheben. Der Druck, bei dem dies stattfindet, läßt sich durch geeignete Bemessung der Dichtungs- und Dichtraumdimensionen sowie der axialen Nachgiebigkeit der Dichtung leicht bestimmen.

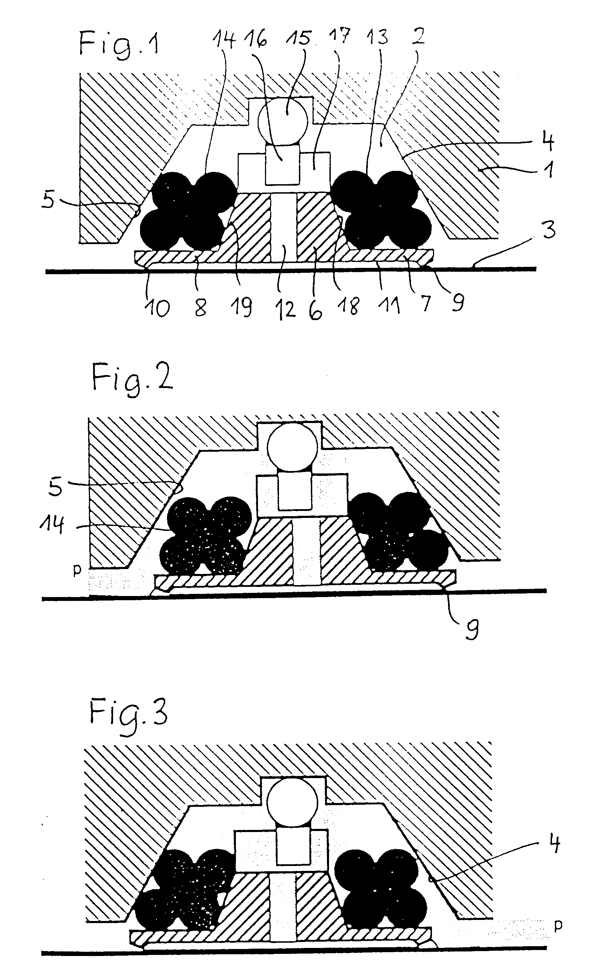

Die axiale Nachgiebigkeit der Dichtung wird in der Regel von den Spannringen geliefert. Genauer gesagt ist die Nachgiebigkeit des jeweils niederdruckseitigen Spannrings maßgebend, der beim Auftreten eines Differenzdrucks unter dem Axialschub der Dichtung komprimiert wird. Jedoch ist es auch möglich, ein von den Spannringen gesondertes elastisches Glied einzusetzen, beispielsweise eine axial wirkende Druckfeder zwischen den beiden Dichtungselementen (analog Fig. 2 der WO-A 87/06991).

Wenn zwei gesonderte Dichtringe verwendet werden, kann die Verbindung zwischen den radial inneren und radial äußeren Bereichen der Dichtungsanordnung im Zwischenraum zwischen den beiden Dichtringen vorgesehen sein, indem diese durch geeignete Vorsprünge oder durch eine dazwischen angeordnete Feder auf Abstand gehalten werden.

Bevorzugt wird jedoch eine Ausführung, bei welcher die beiden Dichtringe einstückig miteinander verbunden sind, so daß ein einheitlicher, doppelt wirkender Dichtring entsteht. In diesem Falle wird in dem Stützteil eine die beiden Bereiche verbindende Öffnung (oder mehrere) vorgesehen.

Ein solcher Dichtring ist mit Vorteil auch für sogenannte Drehverteiler geeignet, d.h. für Anordnungen zur Zuführung eines Druckmediums von einem stationären zu einem sich drehenden Teil, beispielsweise zur Zuführung von Hydraulikflüssigkeit zu einer Werkzeugmaschinenspindel, die einen hydraulischen Spannkopf trägt.

Die Erfindung wird im folgenden näher unter Bezugnahme auf die Zeichnung erläutert, die ein vorteilhaftes Ausführungsbeispiel veranschaulicht. Darin zeigen:
- Fig. 1 bis 3: je einen radialen Längsschnitt durch eine doppelt wirkende Wellendichtung und die zugehörigen Gehäuseteile in drei verschiedenen Funktionszuständen.

Das Gehäuse 1 bildet einen nutförmigen Ringraum 2, der zu der von einer Welle gebildeten Gegenlauffläche 3 hin offen ist und zwei Stirnflächen 4 bzw. 5 aufweist.

Die darin enthaltene Dichtung umfaßt einen Stützteil 6, von dem in beiden Axialrichtungen rohrförmige Dichtringteile 7 bzw. 8 ausgehen, die nahe ihren Enden Dichtkanten 9 bzw. 10 tragen. Mit der Gegenlauffläche 3 schließen sie einen Spalt 11 ein. Der Stützteil 6 enthält eine Radialbohrung 12 oder mehrere. Die rohrförmigen Dichtringteile 7, 8 sind dünn ausgebildet, um Radialschlägen der Welle nachgeben zu können.

Radial außerhalb der rohrförmigen Dichtringteile 7, 8 befinden sich die Spannringe 13, 14.

Die Spannringe sind so gewählt, daß im drucklosen Zustand die Dichtkanten 9, 10 mit Vorspannung an der Gegenlauffläche 3 anliegen und die Spannringe 13, 14 an den zugehörigen Ringraumstirnflächen 4, 5 anliegen. Im Ringraum ist ein Ring 15 drehfest gehalten, der mit einem Radialvorsprung 16 in eine Umfangsausnehmung 17 der Dichtung eingreift und eine Verdrehsicherung für die Dichtung bildet.

Bei Druckbeaufschlagung von links (Fig. 2) wird die Dichtung nach rechts verschoben. Schon bei geringem Differenzdruck hebt der Spannring 14 von der zugehörigen Ringraumstirnfläche 5 ab und macht dadurch den Ringraum 2 hinter der Dichtung dem überdruck zugänglich, der sich durch die Bohrung 12 auch in den Spalt 11 ausbreitet. Dadurch sind die Voraussetzungen für den Druckausgleich gegeben, der zur Entlastung der bei dieser Richtung der Druckbeaufschlagung wirksamen Dichtkante 9 führt.

Die umgekehrten Verhältnisse stellen sich bei Druck von rechts (Fig. 3) ein.

Die Spannringe 13, 14 können für eine gleichmäßige Beaufschlagung der Außenfläche des rohrförmigen Dichtungsteils 7, 8 eine dem sie aufnehmenden Raum angenäherte Querschnittsgestalt aufweisen (WO-A 87/06991, Fig. 1). Jedoch hat dies den Nachteil, daß die Federkonstante der Anordnung gegenüber axialer Beanspruchung hoch liegt und verhältnismäßig große Kräfte für die erwünschte Axialverschiebung der Dichtung erforderlich sind. Bevorzugt werden deshalb solche Querschnittsformen der Spannringe, die (wenigstens zu Beginn der Axialverschiebung) eine größere Nachgiebigkeit aufweisen. Schon im Querschnitt kreisförmig begrenzte O-Ringe haben eine größere Nachgiebigkeit. Noch größer ist diejenige der im dargestellten Ausführungsbeispiel verwendeten Profilringe.

Ebenfalls der Erhöhung der axialen Nachgiebigkeit dient die in den dargestellten Ausführungsbeispielen vorgesehene Neigung der Stirnflächen 4, 5 des Ringraums 2. Einer gleichen Vergrößerung der Anlagefläche zwischen einem Spannring und der zugehörigen Stirnfläche entspricht bei dieser geneigten Anordnung eine größere Axialverschiebungsstrecke als bei einer planen, lotrecht zur Achse stehenden Stirnfläche, obwohl auch eine solche im Zusammenhang der Erfindung verwendbar ist. Weiter wirkt sich bei geneigten Stirnflächen hinsichtlich der Nachgiebigkeit vorteilhaft aus, daß zwischen dem Spannring und der Stirnfläche niederdruckseitig ein größeres Volumen zur Aufnahme des bei der Verformung des Spannrings verdrängte Volumen zur Verfügung steht.

Wenn seitens des Gehäuses 1 ein Hydraulikkanal in den Ringraum 2 mündet und ein weiterer Kanal in der Welle 3 in den Spalt 11 mündet, so stehen diese Kanäle über die Bohrung 12 miteinander in Verbindung. Die Anordnung gemäß Fig. 1 bildet dann für die Hydraulikflüssigkeit eine Drehdurchführung.

Da für Drehdurchführung auch auf dieselbe Dichtungsform zurückgegriffen werden kann, vereinfacht sich die Lagerhaltung. Ein weiterer Vorteil der Anwendung für Drehdurchführungen besteht darin, daß bei diesen die axiale Stellung der Dichtkantenebene zu den benachbarten Stirnflächenebenen unveränderlich ist und daß daher das Ausmaß des radialen Druckausgleichs an dem rohrförmigen Dichtungsteil bzw. die verbleibenden Dichtkräfte an der Dichtkante sehr genau bemessen werden können, wobei nach Wunsch eine mit dem Druck ansteigende oder konstant bleibende Dichtpressung gewählt werden kann. Es kann sogar eine mit steigendem Druck abfallende Dichtpressung erzielt werden, wenn die Dichtkantenebene außerhalb der Stirnflächenebene liegt.

Die Schraffierung in den Figuren deutet einen einstückigen Dichtring an. Es ist aber nicht unbedingt erforderlich, den Dichtring einstückig auszubilden.

## Patentansprüche

1. Wechselseitig wirkende Dichtungsanordnung mit einer Dichtung, einem die Dichtung in einem Ringraum (2) aufnehmenden Bauteil und einer relativ dazu axial und/oder drehend bewegten Gegenlauffläche (3), wobei die Dichtung von zwei gegensinnig orientierten jeweils nur in einer Druckrichtung wirkenden Dichtringen gebildet ist, dadurch gekennzeichnet,
- daß jeder verwendete Dichtring einen dünnwandigen, rohrförmigen Dichtringteil (7, 8), einen den rohrförmigen Dichtringteil an dem der Druckseite zugewandten Ende abstützenden Stützteil (6), eine auf der Gegenlauffläche (3) aufstehenden Dichtkante (9, 10) nahe dem anderen Ende des rohrförmigen Dichtringteils und jeweils einen den rohrförmigen Dichtringteil berührenden Spannring (13, 14) aus elastischem Werkstoff umfaßt, der einerseits an einer Stirnfläche (4, 5) des Ringraums (2) und andererseits an einer Stirnfläche (18, 19) des Stützteils (6) anliegt,
- daß die einzelnen Dichtringe einander ihre Druckseite zukehren,
- daß die axiale Nachgiebigkeit der Dichtung und die axiale Länge des Ringraums (2) so bemessen sind, daß sich bei Differenzdruckeinwirkung auf die Dichtungsanordnung der druckseitige Spannring (13, 14) von der zugehörigen Stirnfläche (4, 5) des Ringraums (2) abhebt,
- und daß die zwischen der Dichtung und der Gegenlauffläche (3) einerseits (11) und dem Ringraumgrund andererseits (2) befindlichen Räume miteinander verbunden sind.

2. Dichtung zur Abdichtung zwischen konzentrischen Maschinenteilen und bestehend aus zwei miteinander verbundenen, axial gegensinnig orientierten Dichtringen, dadurch gekennzeichnet, daß jeder Dichtring einen dünnwandigen, rohrförmigen Dichtringteil (7, 8), jeweils einen den rohrförmigen Dichtringteil (7, 8) an seinem dem anderen Dichtring zugewandten Ende abstützenden Stützteil (6), einen an dem rohrförmigen Dichtringteil (7, 8) sowie an einer Stirnfläche (18, 19) des Stützteils (6) anliegenden Spannring (13, 14) aus elastischem Werkstoff und eine nahe dem vom Stützteil (6) abgewandten Ende des rohrförmigen Dichtringteils (7, 8) an der der Anlagefläche des Spannrings (13, 14) gegenüberliegenden Radialfläche dieses rohrförmigen Dichtringteils (7, 8) angeordnete Dichtkante (9, 10) umfaßt, und daß zwischen den Stützteilen (6) der beiden Dichtringe eine radiale Öffnung (12) vorgesehen ist, die die beiden Radialseiten der Dichtung verbindet.

3. Dichtung nach Anspruch 2, dadurch gekennzeichnet, daß die Stützteile (6) der beiden Dichtringe einstückig miteinander verbunden sind und mindestens eine radiale Öffnung (12) enthalten.

4. Dichtungsanordnung nach Anspruch 1, dadurch gekennzeichnet, daß die Stirnflächen (4, 5) des Ringraums (2) zur Achse lotrecht stehen.

5. Dichtungsanordnung nach Anspruch 1, dadurch gekennzeichnet, daß die Stirnflächen (4, 5) des Ringraums (2) geneigt im Sinne einer Erweiterung des Ringraums zur Gegenlauffläche hin verlaufen.

## Claims

1. A reciprocally acting sealing assembly having a seal, a component accommodating the seal in an annular chamber (2) and an opposing surface (3) moving axially relative thereto and/or rotating, wherein the seal is formed by two sealing rings directed in opposite directions and each acting only in one pressure direction, characterised
- in that each sealing ring used comprises a thin-walled, tubular sealing ring part (7, 8), a support part (6) supporting the tubular sealing ring part against the end nearest the pressure side, a sealing edge (9, 10) resting on the opposing surface (3) near to the other end of the tubular sealing ring part and a respective clamping ring (13, 14) of elastic material which is in contact with the tubular sealing ring part and which, on one side, is applied against one end face (4, 5) of the annular chamber (2) and, on the other side, against one end face (18, 19) of the support part (6),
- in that the individual sealing rings face their pressure side towards one another,
- in that the axial flexibility of the seal and the axial length of the annular chamber (2) are calculated so that when a differential pressure acts on the sealing assembly the clamping ring (13, 14) on the pressure side is lifted from the associated end face (4, 5) of the annular chamber (2),
- and in that the spaces situated between the seal and the opposing surface (3), on the one hand, and the bottom of the annular chamber (2), on the other hand, are connected with one another.

2. A seal for sealing between concentric machine parts and comprising two interconnected sealing rings which are directed in axially opposite directions, characterised in that each sealing ring comprises a thin-walled, tubular sealing ring part (7, 8), a respective support part (6) supporting the tubular sealing ring part (7, 8) against its end nearest the other sealing ring, a clamping ring (13, 14) of elastic material applied against the tubular sealing ring part (7, 8) and against one end face (18, 19) of the support part (6), and a sealing edge (9, 10) disposed near to that end of the tubular sealing ring part (7, 8) remote from the support part (6) on the radial surface of this tubular sealing ring part (7, 8) opposite the abutment surface of the clamping ring (13, 14), and in that a radial opening (12) is provided between the support parts (6) of the two sealing rings, which opening connects the two radial sides of the seal.

3. A seal according to Claim 2, characterised in that the support parts (6) of the two sealing rings are connected to one another in one piece and include at least one radial opening (12).

4. A sealing assembly according to Claim 1, characterised in that the end faces (4, 5) of the annular chamber (2) are perpendicular to the axis.

5. A sealing assembly according to Claim 1, characterised in that the end faces (4, 5) of the annular chamber (2) extend inclined forming a widening of the annular chamber towards the opposing surface.

## Revendications

1. Dispositif d'étanchéité à double effet, comprenant un joint, un élément de machine qui reçoit le joint dans une gorge annulaire (2), et une surface antagoniste (3) animée d'un mouvement axial et/ou de rotation par rapport à cet élément de machine, le joint étant constitué par deux anneaux d'étanchéité qui sont orientés en sens opposés et n'agissent chacun que dans une direction de pression, caractérisé
- en ce que chaque anneau d'étanchéité utilisé comprend une partie tubulaire d'anneau d'étanchéité (7, 8) à paroi mince, une partie d'appui (6) qui soutient la partie tubulaire d'anneau d'étanchéité à son extrémité située du côté où s'exerce la pression, une arête d'étanchéité (9, 10) qui s'applique sur la surface antagoniste mobile (3) et qui est située à proximité de l'autre extrémité de la partie tubulaire d'anneau d'étanchéité, et un anneau de serrage (13, 14) en matière élastique qui est en contact avec la partie tubulaire d'anneau d'étanchéité et qui s'applique d'un côté sur une surface d'extrémité de la gorge annulaire (2) et, de l'autre côté, sur une surface d'extrémité (18, 19) de la partie d'appui (6),
- en ce que les côtés des anneaux d'étanchéité où s'exerce la pression sont dirigés l'un vers l'autre,
- en ce que la souplesse axiale du joint et la longueur axiale de la gorge annulaire (2) sont dimensionnées de telle sorte que lorsqu'une pression différentielle agit sur le dispositif d'étanchéité, l'anneau de serrage (13, 14) situé du côté où s'exerce la pression se détache de la surface d'extrémité (4, 5) correspondante de la gorge annulaire (2),
- et en ce que les espaces (11, 2) qui se trouvent entre le joint et la surface antagoniste mobile (3) d'une part et entre le joint et le fond de la gorge annulaire (2) d'autre part sont en communication mutuelle.

2. Joint pour assurer l'étanchéité entre des éléments de machine concentriques, se composant de deux anneaux d'étanchéité orientés axialement en sens opposés et reliés l'un à l'autre, caractérisé en ce que chaque anneau d'étanchéité comprend une partie tubulaire d'anneau d'étanchéité (7, 8) à paroi mince, une partie d'appui (6) qui soutient la partie tubulaire d'anneau d'étanchéité (7, 8) à son extrémité située du côté de l'autre anneau d'étanchéité, un anneau de serrage (13, 14) en matière élastique qui s'applique sur la partie tubulaire d'anneau d'étanchéité (7, 8) ainsi que sur une surface d'extrémité (18, 19) de la partie d'appui (6), et une arête d'étanchéité (9, 10) formée sur la surface radiale de la partie tubulaire d'anneau d'étanchéité (7, 8) opposée à la surface d'application de l'anneau de serrage (13, 14), à proximité de l'extrémité de cette partie tubulaire d'anneau d'étanchéité (7,8) qui est à l'opposé de la partie d'appui (6), et en ce qu'il est prévu, entre les parties d'appui (6) des deux anneaux d'étanchéité, une ouverture radiale (12) qui met en communication les deux côtés radiaux du joint.

3. Joint selon la revendication 2, caractérisé en ce que les parties d'appui (6) des deux anneaux d'étanchéité sont reliées l'une à l'autre d'une seule pièce et contiennent au moins une ouverture radiale (12).

4. Dispositif d'étanchéité selon la revendication 1, caractérisé en ce que les surfaces d'extrémité (4, 5) de la gorge annulaire (2) sont perpendiculaires à l'axe.

5. Dispositif d'étanchéité selon la revendication 1, caractérisé en ce que les surfaces d'extrémité (4, 5) de la gorge annulaire (2) sont inclinées dans le sens d'un élargissement de la gorge annulaire en direction de la surface antagoniste mobile.
